# FASCICULE DE BREVET EUROPEEN

(11) **EP 2 858 786 B1**
(45) Date de publication et mention de la délivrance du brevet: **11.09.2019**
(21) Numéro de dépôt: 13728463.4
(22) Date de dépôt: 23.05.2013
(51) Int. Cl.: B23K 26/08, B23K 26/12, B23K 26/34, F01D 5/00, B23P 6/00

(54) **PROCEDE DE RECHARGEMENT GLOBAL DE PIECE METALLIQUE POUR TURBOREACTEURS D'AERONEFS, ET OUTILLAGE DE PROTECTION GLOBALE POUR LA MISE EN OEUVRE DU PROCEDE**
VERFAHREN ZUM VOLLSTÄNDIGEN MATERIALAUFTRAG AUF EINER KOMPONENTEN EINES FLUGZEUGSTRIEBWERKS, UND WERKZEUG DAFÜR.
METHOD FOR THE COMPLETE BUILT UP WELDING OF A JET ENGINE COMPONENT AND TOOL THEREFOR

(30) Priorité: 06.06.2012 FR 1255288
(43) Date de publication de la demande: 15.04.2015
(73) Titulaire: Safran Aircraft Engines, 75015 Paris (FR)
(72) Inventeur: MOTTIN, Jean-Baptiste, F-77550 Moissy-Cramayel Cedex (FR)
(74) Mandataire: Camus, Olivier Jean-Claude
(86) Numéro de dépôt international: PCT/FR2013/051118
(87) Numéro de publication internationale: WO 2013/182773

(56) Documents cités:
- WO-A1-2009/118213
- DE-A1-102008 056 336
- US-B1- 6 326 585

## Description

### DOMAINE TECHNIQUE DE L'INVENTION

La présente invention concerne un procédé de rechargement global de pièce métallique pour turboréacteurs d'aéronefs. Elle concerne également un outillage spécifique assurant une protection globale des pièces métalliques à recharger par le procédé selon l'invention.

Le domaine technique de l'invention est donc, d'une façon générale, celui des moteurs d'aéronef, et plus particulièrement celui de la réparation par un procédé de rechargement de certaines pièces métalliques des moteurs d'aéronefs.

Sans être limitatif, la pièce métallique considérée est avantageusement par exemple une pale d'un disque aubagé monobloc, ou encore toute pièce présentant un bord de fuite et/ou un bord d'attaque, par exemple des aubes de turbine basse pression. Dans la pratique, l'invention concerne toute pièce métallique de turboréacteur d'aéronef présentant une partie, notamment une extrémité, nécessitant une opération de rechargement, c'est à dire de réparation par reconstitution d'une forme appropriée de la pièce considérée, par un procédé du type réparation TIP. Les procédés du type réparation TIP utilisent un procédé de projection laser dirigé (ou un faisceau d'électrons dirigé), opérant une fusion sélective de poudre (procédé connu notamment sous les appellations "Laser cladding", ou "laser metal déposition" en langue anglaise), qui permet, par passage successif d'un laser sur un dépôt de poudre, de reconstituer la pièce considérée.

Les pièces métalliques qui sont avantageusement concernées par l'invention sont celles présentant un risque d'oxydation lors de l'opération de rechargement ; il en est ainsi des pièces métalliques comportant du titane, mais aussi du nickel, de l'aluminium, ou encore du cobalt. Pour de telles pièces, il est en effet nécessaire, afin d'empêcher une quelconque détérioration des caractéristiques mécaniques de la pièce considérée, d'empêcher toute oxydation de ladite pièce.

### ARRIERE PLAN TECHNOLOGIQUE DE L'INVENTION

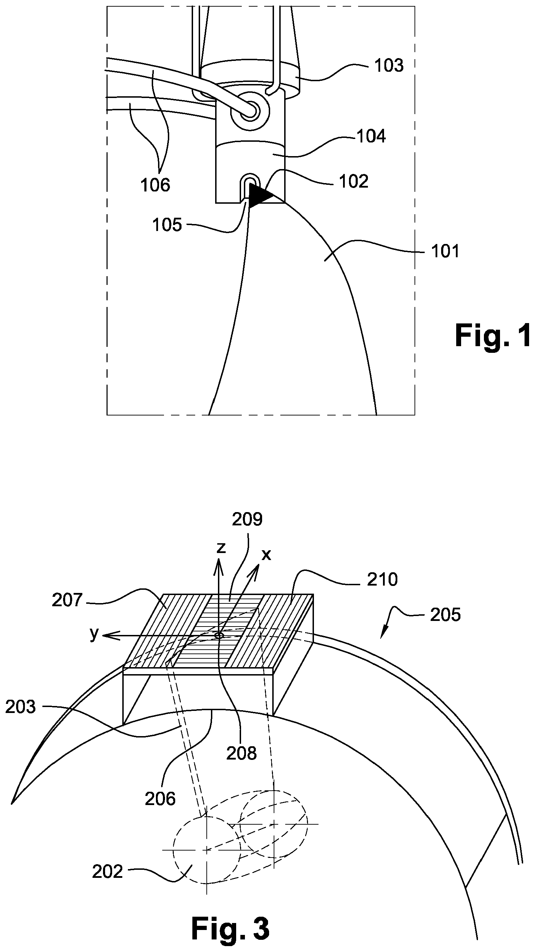

Dans l'état de la technique, on a proposé plusieurs solutions pour procéder à de telles opérations de rechargement laser dans le but de réparer certaines pièces métalliques tout en évitant un phénomène d'oxydation de la pièce considérée. On a notamment proposé la solution illustrée à la figure 1. Sur cette figure, on a représenté une pale 101 dont une extrémité 102 a été endommagée et doit faire l'objet d'un rechargement par fusion laser. A cet effet, on utilise une buse 103, émettant un faisceau laser, ou plus généralement un faisceau d'électrons, destiné à faire entrer en fusion une poudre en vue du rechargement de l'extrémité 102.

Dans ce procédé illustré, on a disposé une enceinte de protection 104 à l'extrémité de la buse 103. L'enceinte de protection 104 présente une extrémité inférieure avec une encoche 105 globalement en forme de U inversé, encoche 105 dans laquelle vient s'insérer l'extrémité 102 à recharger. Le volume intérieur de l'encoche 105 est vidé de son oxygène par l'envoi d'un gaz neutre, par exemple de l'argon ou de l'hélium, par des tuyaux 106 reliés à la buse 103 ; le rechargement de l'extrémité 102 peut ainsi être effectué sans phénomène d'oxydation. Dans un tel exemple, on utilise donc un gaz provenant de la buse comme protection locale de la zone à reconstruire.

Cependant, un tel procédé n'est pas satisfaisant pour recharger l'extrémité 102 sur une distance significative de quelques centimètres. Or l'extrémité 102 de la pale 101 est courbe, et le déplacement en translation auquel est limitée la buse 103 empêche l'enceinte de protection de se déplacer sur cette distance significative. En effet, l'encoche 105, afin de pouvoir assurer son remplissage par un gaz neutre, et pour que l'enceinte de protection 104 puisse s'insérer entre la pale 101 et les pales voisines - non représentées - doit avoir une dimension limitée. Une telle limitation de ces dimensions a pour conséquence que les parois de l'encoche 105 sont proches l'une de l'autre, et entrent rapidement en contact avec l'extrémité 102, bloquant le mouvement de l'extrémité 102 à l'intérieur de l'encoche 105, et empêchant en conséquence la possibilité de rechargement sur la totalité de l'extrémité 102 à recharger. Par ailleurs, en dépit des efforts de mise en oeuvre qui ont pu être faits, le phénomène d'oxydation ne peut pas être totalement supprimé par ce procédé. Un exemple d'enceinte localisée est également décrit dans le document DE 10 2008 056 336 A1.

On a également proposé, dans l'état de la technique, l'utilisation de cabines de taille importante créant un espace soit rempli de gaz neutre, soit dans lequel le vide est fait, dans lequel sont introduits la pièce à recharger et tout l'équipement intervenant pour le rechargement (voir le document WO 2009/118213 A1); mais une telle solution est coûteuse, et lente à mettre en oeuvre, du fait des grandes quantités de gaz inertes introduites dans la cabine considérée.

### DESCRIPTION GENERALE DE L'INVENTION

L'objet de l'invention offre une solution aux problèmes qui viennent d'être exposés, en proposant un procédé et un outillage de protection globale pour le rechargement de pièces métalliques, peu onéreux, facile d'utilisation qui assure la possibilité de recharger différentes parties métalliques d'une même pièce métallique de manière rapide et peu consommatrice en terme d'utilisation de gaz neutre.

A cet effet, on prévoit notamment de disposer la pièce métallique comportant les différentes parties métalliques à recharger sur un plateau tournant, l'espace entourant la pièce métallique étant rendu étanche par un couvercle présentant une ouverture destinée à recevoir la buse émettant le faisceau laser, ou le faisceau d'électrons. L'utilisation du panneau tournant permet dans un mode de mise en oeuvre avantageux, de venir positionner rapidement les différentes parties à recharger face à la buse.

L'invention concerne ainsi essentiellement un procédé de rechargement d'une pièce métallique de turboréacteur d'aéronef, ladite pièce métallique comportant une pluralité de parties métalliques à recharger, ledit procédé faisant intervenir une buse émettant un faisceau laser, ou un faisceau d'électrons, destiné à faire fondre une poudre projetée assurant le rechargement desdites parties métalliques à recharger, caractérisé en ce que ledit procédé comporte les différentes étapes suivantes :
- mise en position de la pièce métallique comportant la pluralité de parties métalliques à recharger sur un plateau tournant ;
- mise en position d'un couvercle sur le plateau tournant, la totalité de ladite pièce métallique étant positionnée sous ledit couvercle ;
- positionnement de la buse au niveau d'une ouverture présente dans le couvercle ;
- introduction d'un gaz inerte sous le couvercle ;
- rechargement d'une première partie de la pluralité de parties métalliques de la pièce métallique en procédant à une opération de projection de poudres métalliques, à une opération d'émission du faisceau laser assurant le rechargement de ladite première partie métallique, et à une opération de déplacement relatif de la buse par rapport à ladite première pièce métallique selon une trajectoire de rechargement préalablement déterminée.

Outre les caractéristiques principales qui viennent d'être mentionnées dans le paragraphe précédent, le procédé selon l'invention peut présenter une ou plusieurs caractéristiques complémentaires parmi les suivantes, considérées individuellement ou selon les combinaisons techniquement possibles :
- le procédé comporte l'étape supplémentaire consistant à, préalablement à l'étape d'introduction du gaz inerte, fixer de manière étanche le couvercle sur le plateau tournant.
- le procédé comporte l'étape supplémentaire consistant à, équiper l'ouverture présente dans le couvercle d'un plateau télescopique présentant un orifice au niveau duquel est positionnée la buse.
- le procédé comporte, après l'étape de rechargement de la première partie métallique, les différentes étapes supplémentaires suivantes :
- rotation du plateau tournant par rapport à l'ouverture du couvercle pour amener une deuxième partie métallique de la pluralité de parties métalliques à recharger face à la buse;
- rechargement de la deuxième partie métallique de la pièce métallique.
   - le procédé comporte l'étape supplémentaire consistant à, ultérieurement à la mise en position de la pièce métallique comportant la pluralité de parties métalliques à recharger sur un plateau tournant, procéder à une opération de palpage des parties métalliques à recharger pour déterminer les trajectoires de rechargement de la buse.

La présente invention se rapporte également à un outillage, apte à mettre en oeuvre le procédé selon l'invention, qui comporte les caractéristiques de la revendication 6.

Outre les caractéristiques principales qui viennent d'être mentionnées dans le paragraphe précédent, l'outillage selon l'invention peut présenter une ou plusieurs caractéristiques complémentaires parmi les suivantes, considérées individuellement ou selon les combinaisons techniquement possibles :
- l'outillage comporte un plateau télescopique placé au niveau de l'ouverture du couvercle, et présentant un orifice au niveau duquel est positionnée la buse.
- le plateau télescopique est un plateau télescopique à deux dimensions.
- la buse positionnée au niveau de l'orifice du plateau télescopique présente un jeu avec ledit orifice laissant s'échapper un gaz inerte présent dans l'espace entre le couvercle et le plateau tournant lors du rechargement.
- l'outillage comporte un raccord souple au niveau de l'orifice du plateau télescopique.
- l'outillage comporte des moyens d'étanchéité entre le plateau tournant et le couvercle.
- l'outillage comporte des moyens de fixation amovible entre le plateau tournant et le couvercle.
- le couvercle ou le plateau tournant comportent des moyens d'introduction d'un gaz inerte.
- les moyens d'introduction du gaz inerte présentent un débit compris entre cinq et cinquante litres par minutes.

L'invention et ses différentes applications seront mieux comprises à la lecture de la description qui suit et à l'examen des figures qui l'accompagnent.

### BREVE DESCRIPTION DES FIGURES

Les figures ne sont présentées qu'à titre indicatif et nullement limitatif de l'invention.

Les figures montrent :
- à la figure 1, déjà décrite, une représentation schématique d'un procédé de l'état de la technique pour le rechargement d'une pale ;
- à la figure 2, une représentation schématique d'un exemple d'outillage apte à être utilisé pour la mise en place d procédé selon l'invention ;
- à la figure 3, une représentation schématique d'une partie de l'outillage de la figure 2.

### DESCRIPTION DETAILLEE D'AU MOINS UN MODE DE REALISATION DE

### L'INVENTION

Sauf précision contraire, un même élément apparaissant sur différentes figures aura conservé les mêmes références.

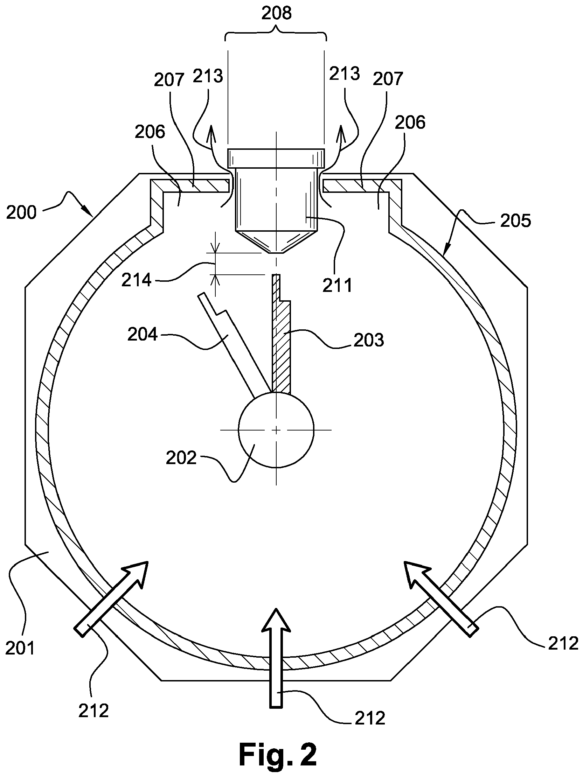

La figure 2 montre un exemple d'outillage 200 selon l'invention.

L'outillage 200 comporte ici :
- un plateau tournant 201, sur lequel on vient positionner, avantageusement en le fixant, une pièce métallique 202, par exemple de type disque aubagé monobloc (DAM), à recharger. La pièce 202 comporte une pluralité de parties métalliques à recharger. Dans l'exemple représenté, seules une première partie métallique 203 et une deuxième partie métallique 204 ont été représentées ; dans la pratique, un DAM comporte typiquement vingt huit pales, qui constituent chacune une partie métallique qui est potentiellement à recharger.
- un couvercle 205, destiné à être placé sur le plateau tournant 201 de telle sorte que la pièce métallique 202 se retrouve sous ledit couvercle 205, dans un espace hermétique, fermé sauf au niveau d'une ouverture 206 ménagée dans le couvercle 205.

Le couvercle 205 comporte avantageusement des moyens 212 d'introduction, ou d'arrivée, d'un gaz inerte aptes à remplir le volume sous le couvercle 205 d'un gaz inerte empêchant l'oxydation de la pièce métallique 202 lors des opérations de rechargement.

Le couvercle 205 est avantageusement fixé sur le plateau tournant 201. Les moyens de fixation sont de préférence amovibles. Par moyens de fixation amovibles, on désigne des moyens de fixation aptes à être retirés, relâchés, au moins partiellement de manière très simple, en quelques secondes. Le couvercle est ainsi avantageusement centré sur le plateau tournant et maintenu en position en utilisant par exemple des « sauterelles » ou un système de bridage vis-écrou.

Dans un mode de réalisation avantageux, on prévoit un système d'étanchéité complémentaire, par exemple de type joint torique ou joint à écrasement, entre le plateau tournant 201 et le couvercle 205.

Dans un mode de réalisation avantageux, l'ouverture 206 est équipée d'un dispositif de type plateau télescopique 207, également visible en perspective sur la figure 3. Le plateau télescopique 207 avantageusement obstrue l'ouverture 206 sauf au niveau d'un orifice 208 de taille moins importante que l'ouverture 206.

Le plateau télescopique 207 est dans l'exemple représenté de type bidimensionnel : il comporte ainsi un premier ensemble de plaques coulissantes 209 permettant à l'orifice 208 d'être déplacé selon une première direction correspondant à l'axe x, et un deuxième ensemble de plaques coulissantes 210 permettant à l'orifice 208 d'être déplacé selon une deuxième direction correspondant à l'axe y. L'orifice 208 peut ainsi être déplacé sur la quasi-totalité de la surface définie par le plateau télescopique 207 - la zone de déplacement de l'orifice 208 étant limitée au niveau des rebords du plateau télescopique 207 par la largeur des plaques coulissantes utilisées.

Dans l'invention, on prévoit de placer une buse 211 au niveau de l'ouverture 206, notamment au niveau de l'orifice 208 quand le plateau télescopique 207 est installé. La tête de la buse 211 est apte à émettre un faisceau laser ou un faisceau d'électrons. En étant placée dans l'orifice 208, elle se positionne à une distance 214 de projection optimale, et elle entraine en mouvement selon les directions x et y le premier ensemble de plaques coulissantes 209 et le deuxième ensemble de plaques coulissantes 210 ; la tête de buse 211 est ainsi en mesure de se déplacer sur la quasi-totalité de la surface définie par le plateau télescopique 207.

Dans le procédé selon l'invention, on prévoit de placer la première partie métallique 203 en regard de l'ouverture 206, et dans l'exemple représenté, en regard de l'orifice 208. La liberté de mouvement donnée à la buse 211 par la présence du plateau télescopique 207 permet de procéder au rechargement de la première partie métallique 203 dans sa totalité, sans que ladite première partie métallique 203 ait à être déplacée ; elle est maintenue fixe sur le plateau tournant 201. La buse 211 peut ainsi observer un déplacement correspondant à une trajectoire de rechargement préalablement déterminée.

Dans un autre mode de mise en oeuvre, on prévoit que la partie métallique à recharger peut également être mobile. Le déplacement de la buse par rapport à la partie métallique à recharger est ainsi un déplacement relatif : soit la buse elle seule est en mouvement ; soit la partie métallique à recharger est également mobile afin de parfaire les opérations de rechargement.

Une fois que le rechargement de la première partie métallique 203 est réalisé, on procède au rechargement de la deuxième partie métallique 204. A cet effet, on désolidarise le plateau tournant 201 du couvercle 205, par exemple en desserrant les moyens de fixation du couvercle 205 sur le plateau tournant 201. Le plateau tournant 201 est alors bougé en rotation par rapport au couvercle 205 de telle sorte que la deuxième pièce métallique 204 est amenée en regard de l'orifice 208. Lorsque la deuxième partie 204 est positionnée pour être rechargée, on solidarise de nouveau le plateau tournant 201 avec le couvercle 205.

Il est possible qu'une partie du gaz inerte se soit échappée lors de la désolidarisation du plateau tournant 201 et du couvercle 205. Même si une telle perte est observée, elle est mineure, et l'espace intérieur au couvercle 205 est rapidement de nouveau saturé en gaz inerte par l'activation des moyens 212 d'arrivée de gaz.

Dans certains modes de réalisation, il existe des fuites 213 au niveau de la tête de buse 211 lorsque celle-ci est positionnée au niveau de l'orifice 208. Ces fuites 213 sont dues à la nécessité de laisser un jeu entre la tête de buse 211 et l'orifice 208 notamment pour que la buse puisse évoluer en rotation par exemple selon l'axe z, perpendiculaire au plan défini par le plateau télescopique 207. Le jeu présent ici est typiquement compris entre un et dix millimètres.

Ainsi, pour compenser la perte de gaz inerte par les fuites 213, mais également pour assurer une surpression dans le volume intérieur du couvercle 205, on prévoit avantageusement que les moyens 212 d'arrivée de gaz inerte ont un débit, par exemple un débit d'argon qui présente une forte densité par rapport à l'air, compris entre cinq et vingt cinq litres par minutes.

Dans un exemple particulier de réalisation, on prévoit d'équiper l'orifice 208 d'un raccord souple, qui permet de diminuer les fuites 213 tout en laissant une liberté de mouvement satisfaisante à la buse 211 pour autoriser les rotations de celle-ci.

L'outillage 200 selon l'invention permet par ailleurs de réaliser de manière simplifiée, dans la mesure où cette opération peut être réalisée dans les mêmes conditions de positionnement que les opérations de rechargement, une opération de détermination des trajectoires de rechargement que la buse 211 devra observer pour chaque partie métallique à recharger. Ainsi, lorsque la pièce métallique 202 est disposée sur le plateau tournant 201, chaque partie métallique est palpée au moyen d'un capteur approprié, désigné comme palpeur, pour déterminer les défauts des parties métalliques à recharger. Les trajectoires de rechargement que la buse 211 devra observer sont ainsi déterminées pour chaque partie métallique considérée.

## Revendications

1. Procédé de rechargement d'une pièce métallique (202) de turboréacteur d'aéronef, ladite pièce métallique (202) comportant une pluralité de parties métalliques (203 ; 204) à recharger, ledit procédé faisant intervenir une buse (211) émettant un faisceau laser, ou un faisceau d'électrons, destiné à faire fondre une poudre projetée assurant le rechargement desdites parties métalliques (203 ;204) à recharger, **caractérisé en ce que** ledit procédé comporte les différentes étapes suivantes :
- mise en position de la pièce métallique (202) comportant la pluralité de parties métalliques (203 ; 204) à recharger sur un plateau tournant (201) ;
- mise en position d'un couvercle (205) sur le plateau tournant (201), la totalité de ladite pièce métallique (202) étant positionnée sous ledit couvercle (205) ;
- positionnement de la buse (211) au niveau d'une ouverture (206) présente dans le couvercle (205) ;
- introduction d'un gaz inerte sous le couvercle (205) ;
- rechargement d'une première partie (203) de la pluralité de parties métalliques de la pièce métallique (202) en procédant à une opération de projection de poudres métalliques, à une opération d'émission du faisceau laser assurant le rechargement de ladite première partie métallique (203), et à une opération de déplacement relatif de la buse (211) par rapport à ladite première pièce métallique (203) selon une trajectoire de rechargement préalablement déterminée.

2. Procédé selon la revendication précédente **caractérisé en ce qu'**il comporte l'étape supplémentaire consistant à, préalablement à l'étape d'introduction du gaz inerte, fixer de manière étanche le couvercle (205) sur le plateau tournant (201).

3. Procédé selon l'une quelconque des revendications précédentes **caractérisé en ce qu'**il comporte l'étape supplémentaire consistant à, équiper l'ouverture (206) présente dans le couvercle d'un plateau télescopique (207) présentant un orifice (208) au niveau duquel est positionnée la buse (211).

4. Procédé selon l'une quelconque des revendications précédentes **caractérisé en ce qu'**il comporte, après l'étape de rechargement de la première partie métallique (203), les différentes étapes supplémentaires suivantes :
- rotation du plateau tournant (201) par rapport à l'ouverture (206) du couvercle (205) pour amener une deuxième partie métallique (204) de la pluralité de parties métalliques à recharger face à la buse (211) ;
- rechargement de la deuxième partie métallique (204) de la pièce métallique (202).

5. Procédé selon l'une quelconque des revendications précédentes, **caractérisé en ce qu'**il comporte l'étape supplémentaire consistant à, ultérieurement à la mise en position de la pièce métallique (202) comportant la pluralité de parties métalliques (203 ; 204) à recharger sur un plateau tournant (201), procéder à une opération de palpage des parties métalliques (203 ; 204) à recharger pour déterminer les trajectoires de rechargement de la buse (211).

6. Outillage (200), apte à mettre en oeuvre le procédé selon l'une quelconque des revendications précédentes, pour le rechargement de parties métalliques (203 ; 204) d'une pièce métallique (202) pour turboréacteur d'aéronef, l'outillage (200) comportant une buse (211) adaptée pour générer un faisceau laser chauffant une poudre pour assurer le rechargement desdites parties métalliques (203 ; 204), **caractérisé en ce que** l'outillage (200) comporte :
- un plateau tournant (201) destiné à supporter la pièce métallique (202) ;
- un couvercle (205) apte à être fixé sur le plateau tournant (201) et destiné à recouvrir la totalité de la pièce métallique (202) disposée sur le plateau tournant (201), ledit couvercle (205) présentant une ouverture (206) au niveau de laquelle est positionnée, pour les opérations de rechargement, la buse (211).

7. Outillage (200) selon la revendication précédente **caractérisé en ce qu'**il comporte un plateau télescopique (207) placé au niveau de l'ouverture (206) du couvercle (205), et présentant un orifice (208) au niveau duquel est positionnée la buse (211).

8. Outillage (200) selon la revendication précédente **caractérisé en ce que** le plateau télescopique (207) est un plateau télescopique à deux dimensions.

9. Outillage (200) selon l'une quelconque des revendications 7 ou 8 **caractérisé en ce que** la buse (211) positionnée au niveau de l'orifice (208) du plateau télescopique (207) présente un jeu avec ledit orifice (208) laissant s'échapper un gaz inerte présent dans l'espace entre le couvercle (205) et le plateau tournant (201) lors du rechargement.

10. Outillage (200) selon l'une quelconque des revendications 7 à 9 **caractérisé en ce qu'**il comporte un raccord souple au niveau de l'orifice (208) du plateau télescopique (207).

11. Outillage (200) selon l'une quelconque des revendications 6 à 10 **caractérisé en ce qu'**il comporte des moyens d'étanchéité entre le plateau tournant (201) et le couvercle (205).

12. Outillage (200) selon l'une quelconque des revendications 6 à 11 **caractérisé en ce qu'**il comporte des moyens de fixation amovible entre le plateau tournant (201) et le couvercle (205).

13. Outillage (200) selon l'une quelconque des revendications 6 à 12 **caractérisé en ce que** le couvercle (205) ou le plateau tournant (201) comporte des moyens (212) d'introduction d'un gaz inerte.

14. Outillage (200) selon la revendication précédente **caractérisé en ce que** les moyens (212) d'introduction du gaz inerte présentent un débit compris entre cinq et cinquante litres par minutes.

## Patentansprüche

1. Nachladeverfahren eines Metallstücks (202) einer Luftschiff-Strahlturbine, wobei das genannte Metallstück (202) eine Vielzahl von nachzuladenden Metallteilen (203; 204) umfasst, wobei das genannte Verfahren eine Düse (211) einsetzt, die einen Laserstrahl oder einen Elektronenstrahl ausgibt, der dazu bestimmt ist, ein gespritztes Pulver schmelzen zu lassen, das das Nachladen der genannten nachzuladenden Metallteile (203; 204) gewährleistet, **dadurch gekennzeichnet, dass** das genannte Verfahren die folgenden unterschiedlichen Schritte umfasst:
- Einsetzen des Metallstücks (202), umfassend die Vielzahl von auf einer Drehplatte (201) nachzuladenden Metallteilen (203; 204);
- Einsetzen eines Deckels (205) auf der Drehplatte (201), wobei das genannte gesamte Metallstück (202) unter dem genannten Deckel (205) positioniert ist;
- Positionieren der Düse (211) an einer Öffnung (206), die im Deckel (205) vorhanden ist;
- Einführen eines Inertgases unter dem Deckel (205);
- Nachladen eines ersten Teils (203) der Vielzahl von Metallteilen des Metallstücks (202) durch Vornehmen einer Spritzoperation mit Metallpulver, einer Ausgabeoperation des Laserstrahls, der das Nachladen des genannten ersten Metallteils (203) gewährleistet, und einer Verschiebungsoperation relativ zur Düse (211) im Verhältnis zu dem genannten ersten Metallstück (203) gemäß einer zuvor bestimmten Nachladebahn.

2. Verfahren gemäß dem voranstehenden Anspruch, **dadurch gekennzeichnet, dass** es den zusätzlichen Schritt umfasst, der darin besteht, vor dem Einführungsschritt des Inertgases den Deckel (205) abgedichtet auf der Drehplatte (201) zu befestigen.

3. Verfahren gemäß irgendeinem der voranstehenden Ansprüche, **dadurch gekennzeichnet, dass** es den zusätzlichen Schritt umfasst, der im Ausrüsten der Öffnung (206) besteht, die im Deckel einer Teleskopplatte (207) vorhanden ist, die ein Loch (208) aufweist, an dem die Düse (211) positioniert ist.

4. Verfahren gemäß irgendeinem der voranstehenden Ansprüche, **dadurch gekennzeichnet, dass** es nach dem Nachladeschritt des ersten Metallteils (203) die folgenden zusätzlichen unterschiedlichen Schritte umfasst:
- Rotation der Drehplatte (201) im Verhältnis zur Öffnung (206) des Deckels (205), um einen zweiten Metallteil (204) aus der Vielzahl von zu ladenden Metallteilen der Düse (211) gegenüber zu verbringen;
- Nachladen des zweiten Metallteils (204) des Metallstücks (202).

5. Verfahren gemäß irgendeinem der voranstehenden Ansprüche, **dadurch gekennzeichnet, dass** es den zusätzlichen Schritt umfasst, der daraus besteht, nach dem Einsetzen des Metallstücks (202), das die Vielzahl von nachzuladenden Metallstücken (203; 204) auf einer Drehplatte (201) umfasst, eine Antastungsoperation der nachzuladenden Metallteile (203; 204) vorzunehmen, um die Nachladebahnen der Düse (211) zu bestimmen.

6. Werkzeug (200), das geeignet ist, um das Verfahren gemäß irgendeinem der voranstehenden Ansprüche zum Nachladen von Metallteilen (203; 204) eines Metallstücks (202) für eine Luftschiff-Strahlturbine umzusetzen, wobei das Werkzeug (200) eine Düse (211) umfasst, die geeignet ist, um einen Laserstrahl zu erzeugen, der ein Pulver erhitzt, um das Nachladen der genannten Metallteile (203; 204) zu gewährleisten, **dadurch gekennzeichnet, dass** das Werkzeug (200) umfasst:
- eine Drehplatte (201), die zum Stützen des Metallstücks (202) geeignet ist;
- einen Deckel (205), der geeignet ist, auf der Drehplatte (201) befestigt zu sein und dazu bestimmt ist, das gesamte Metallstück (202) abzudecken, das auf der Drehplatte (201) angeordnet ist, wobei der genannte Deckel (205) eine Öffnung (206) aufweist, an der die Düse (211) für die Nachladeoperationen positioniert ist.

7. Werkzeug (200) gemäß dem voranstehenden Anspruch, **dadurch gekennzeichnet, dass** es eine Teleskopplatte (207) umfasst, die an der Öffnung (206) des Deckels (205) platziert ist und ein Loch (208) aufweist, an dem die Düse (21) positioniert ist.

8. Werkzeug (200) gemäß dem voranstehenden Anspruch, **dadurch gekennzeichnet, dass** die Teleskopplatte (207) eine zweidimensionale Teleskopplatte ist.

9. Werkzeug (200) gemäß irgendeinem der Ansprüche 7 oder 8, **dadurch gekennzeichnet, dass** die Düse (211), die am Loch (208) der Teleskopplatte (207) positioniert ist, ein Spiel mit dem genannten Loch (208) aufweist, das ein Inertgas austreten lässt, das beim Nachladen in dem Raum zwischen dem Deckel (205) und der Drehplatte (201) vorhanden ist.

10. Werkzeug (200) gemäß irgendeinem der Ansprüche 7 bis 9, **dadurch gekennzeichnet, dass** es einen flexiblen Anschluss am Loch (208) der Teleskopplatte (207) umfasst.

11. Werkzeug (200) gemäß irgendeinem der Ansprüche 6 bis 10, **dadurch gekennzeichnet, dass** es Abdichtmittel zwischen der Drehplatte (201) und dem Deckel (205) umfasst.

12. Werkzeug (200) gemäß irgendeinem der Ansprüche 6 bis 11, **dadurch gekennzeichnet, dass** es abnehmbare Befestigungsmittel zwischen der Drehplatte (201) und dem Deckel (205) umfasst.

13. Werkzeug (200) gemäß irgendeinem der Ansprüche 6 bis 12, **dadurch gekennzeichnet, dass** der Deckel (205) oder die Drehplatte (201) Einführmittel (212) eines Inertgases umfasst.

14. Werkzeug (200) gemäß dem voranstehenden Anspruch, **dadurch gekennzeichnet, dass** die Einführmittel (212) des Inertgases einen zwischen fünf und fünfzig Litern pro Minute inbegriffenen Durchsatz aufweisen.

## Claims

1. Process for cladding a metal part (202) of an aircraft turbojet, said metal part (202) comprising a plurality of metal portions (203; 204) to be cladded, said process using a nozzle (211) emitting a laser beam or an electron beam that will melt a sprayed powder thus cladding said metal parts (203 ; 204) to be cladded, **characterised in that** said process comprises the following different steps:
- put the metal part (202) comprising the plurality of metal portions (203; 204) to be cladded in position on a turntable (201);
- put a lid (205) in position on the turntable (201), all of said metal part (202) being positioned under said lid (205);
- insert the nozzle (211) into an opening (206) present in the lid (205);
- inject a neutral gas under the lid (205);
- clad a first portion (203) of the plurality of metal portions of the metal part (202) by performing a metallic powder spray operation, a laser beam emission operation to clad said first metal portion (203), and a relative displacement operation of the nozzle (211) relative to said first metal part (203) following a predetermined cladding trajectory.

2. Process according to the previous claim, **characterised in that** it comprises the additional step consisting of fixing the lid (205) onto the turntable (201) in a sealed manner before the step consisting of adding the inert gas.

3. Process according to any one of the previous claims, **characterised in that** it comprises the additional step consisting of fitting a telescopic tray (207) in which there is an orifice (208) inside which the nozzle (211) is inserted, into the opening (206) present in the lid.

4. Process according to any one of the previous claims, **characterised in that** it comprises the following different additional steps after the cladding step of the first metal portion (203):
- rotate the turntable (201) relative to the opening (206) in the lid (205) until a second metal portion (204) among the plurality of metal portions to be cladded is facing the nozzle (211);
- clad the second metal portion (204) of the metal part (202).

5. Process according to any one of the previous claims, **characterised in that** it comprises an additional step consisting of performing a feeling operation of the metal portions (203; 204) to be cladded to determine the cladding trajectories of the nozzle (211), after the metal part (202) comprising the plurality of metal portions (203 ; 204) to be cladded has been put into position on a turntable (201).

6. Tool (200) capable of implementing the process according to any one the previous claims, to clad metal portions (203 ; 204) of a metal part (202) for an aircraft turbojet, said cladding being done using a laser generated by a nozzle (211) melting a powder to clad said metal parts (203 ; 204), **characterised in that** the tool (200) comprises:
- a turntable (201) on which the metal part (202) is placed;
- a lid (205) placed on the turntable (201) covering the entire metal part (202) placed on the turntable (201), said lid (205) having an opening (206) inside which the nozzle (211) is inserted for the cladding operations.

7. Tool (200) according to the previous claim, **characterised in that** it comprises a telescopic tray (207) installed at the opening (206) in the lid (205), with an orifice (208) in which the nozzle (211) is inserted.

8. Tool (200) according to the previous claim, **characterised in that** the telescopic tray (207) is a two-dimensional telescopic tray.

9. Tool (200) according to either claim 7 or 8, **characterised in that** the nozzle (211) placed in the orifice (208) of the telescopic tray (207) has a clearance with said orifice (208) through which an inert gas present in the space between the lid (205) and the turntable (201) can escape during cladding.

10. Tool (200) according to any one of claims 7 to 9, **characterised in that** it comprises a hose at the orifice (208) in the telescopic tray (207).

11. Tool (200) according to any one of claims 6 to 10, **characterised in that** it comprises sealing means between the turntable (201) and the lid (205).

12. Tool (200) according to any one of claims 6 to 11, **characterised in that** it comprises removable attachment means between the turntable (201) and the lid (205).

13. Tool (200) according to any one of claims 6 to 12, **characterised in that** the lid (205) or the turntable (201) has means (212) of injecting a neutral gas.

14. Tool (200) according to the previous claim, **characterised in that** the flow from means (212) for injecting the neutral gas is between five and fifty litres per minute.
